Europäisches Patentamt

European Patent Office

Office européen des brevets

(11) Veröffentlichungsnummer: **0 520 253 A2**

## EUROPÄISCHE PATENTANMELDUNG

(21) Anmeldenummer: **92109884.4**

(22) Anmeldetag: **12.06.92**

(51) Int. Cl.5: **B29D 30/06**, B29C 33/20

(30) Priorität: **22.06.91 DE 4120657**

(43) Veröffentlichungstag der Anmeldung:
**30.12.92 Patentblatt 92/53**

(84) Benannte Vertragsstaaten:
**DE ES FR GB**

(71) Anmelder: **KRUPP MASCHINENTECHNIK GESELLSCHAFT MIT BESCHRÄNKTER HAFTUNG**

Helenenstrasse 149

W-4300 Essen 1(DE)

(72) Erfinder: **Grotkasten, Klaus, Dipl.-Ing.**
**Blangendöör 2**
**W-2100 Hamburg 90(DE)**
Erfinder: **Dieckmann, Uwe**
**Bi de Dörpsmeed 5**
**W-2104 Hamburg 92(DE)**

(54) Reifenheizpresse mit wechselbaren Reifenformteilen.

(57) Um einen schnellen und sicheren Wechsel der Reifenformteile (30, 33) zu ermöglichen, werden die obere und untere Heizplatte (28 bzw. 35) mit den zugehörigen Reifenformteilen (30 bzw. 33) zu einer betrieblichen Einheit fest miteinander verbunden. Diese betrieblichen Einheiten werden durch Schnellspannelemente (11, 23; 43, 45) an die jeweilige Formdruckpresse (3 bzw. 37) herangedrückt. Die aus der Heizplatte und dem Reifenformteil gebildete Einheit wird außerhalb der Reifenheizpresse (2) vorgewärmt und in diesem Zustand in die Reifenheizpresse eingebaut.

FIG.1

Die Erfindung betrifft eine Reifenheizpresse mit einer oberen und einer unteren Formdruckplatte, an deren der jeweils anderen Formdruckplatte zugewandten Fläche eine Isolierplatte befestigt ist, mit einer zum Anliegen an der jeweiligen Isolierplatte bestimmten Heizplatte und mit jeweils einem zum Anliegen an der jeweiligen Heizplatte bestimmten Reifenformteil, wobei zumindest ein Reifenformteil durch mehrere Spannelemente, die jeweils mit einer parallel zur Hauptachse der Heizpresse angeordneten, drehbaren Zugstange mit mindestens einem außermittigen Vorsprung versehen sind, in Richtung auf die jeweilige Formdruckplatte heranpreßbar ist. Unter "ein Reifenformteil" ist dabei ein Teil der gesamten Reifenform zu verstehen. Dabei kann dieser Teil sowohl ein einzelnes Reifenformteil (z.B. das obere Reifenformteil einer zweiteiligen Reifenform) als auch eine aus mehreren Einzelteilen zusammengesetzte Anordnung, bestehend z.B. aus einem oberen Formteil und mehreren durch einen Konusring gehaltenen Umfangssegmenten, sein.

Aus der EP-A2-0 368 286 (insbesondere Fig. 8) ist eine Reifenheizpresse bekannt, bei der die Heizplatten ständig über eine Isolierplatte mit der Formdruckplatte verbunden sind und bei der die außermittigen Vorsprünge der Spannelemente eine zusätzliche Hilfs- oder Adapterplatte erfassen, an der der zugeordnete Teil der Reifenform befestigt ist. Die Spannelemente mit den außermittigen Vorsprüngen werden alle durch einen gemeinsamen Kettentrieb angetrieben, wobei die Hubbewegungen der Spannelemente durch eine Gewindepaarung bewirkt wird. Dabei kann es durchaus zu unterschiedlichen Spannkräften kommen. Bei einer Stelle mit geringer Spann- oder Anpreßkraft kann sich dies auf die Wärmeleitung sehr nachteilig auswirken. Die zusätzliche Hilfs- oder Adapterplatte bedeutet nicht nur einen zusätzlichen Aufwand. Es erhöht sich auch, durch eine zusätzliche Materialschicht und eine zusätzliche Flächenpaarung bedingt, der Wärmeübergangswiderstand von der Heizplatte zu dem Reifenformteil, wodurch die Effektivität der Heizung erheblich gemindert wird. Zum Einbau der Reifenformteile müssen diese zusammen mit der Hilfs- oder Adapterplatte außerhalb der Reifenheizpresse vorgewärmt werden, wozu eine separate Vorwärmeinheit mit allen Spannmitteln notwendig ist.

Bei der Ausführungsform gemäß den Fig. 1 bis 7 der EP-A2-0 368 286 werden die betreffenden Reifenformteile zwar unmittelbar in Kontakt mit der betreffenden Heizplatte gebracht, zum Vorwärmen ist aber immer noch eine separate Vorwärmeinrichtung notwendig. Außerdem ist eine komplizierte Mechanik für die die Reifenformteile erfassenden, mit einem Druckmittelzylinder versehenen Spannelemente notwendig.

In beiden Fällen besteht das Problem, daß bei ungleichen Temperaturen nach dem Einbau Relativbewegungen zwischen der Heizplatte und dem angelegten Teil (Hilfs- oder Adapterplatte bzw. das entsprechende Reifenformteil) durch unterschiedliche Längenänderungen stattfinden, die wegen des großen Anpreßdrucks zu mechanischen Spannungen führen und die einmal eingestellte Zentrierung gefährden können.

Der vorliegenden Erfindung liegt die Aufgabe zugrunde, eine Reifenheizpresse zu schaffen, bei der die genannten Nachteile vermieden werden und bei der mit einfachen Mitteln ein schneller und sicherer Wechsel der Reifenformteile möglich ist.

Diese Aufgabe wird erfindungsgemäß dadurch gelöst, daß die jeweilige Heizplatte und das zugehörige Reifenformteil fest miteinander verbunden sind und die Vorsprünge der Spannelemente im betriebsbereiten Zustand der Heizpresse an der aus der betreffenden Heizplatte und dem zugehörigen Reifenformteil bestehenden Einheit anliegen. Durch das Miteinanderverbinden der jeweiligen Heizplatte und der zugehörigen Reifenformteile wird eine betriebliche Einheit gebildet, bei der von vornherein ein ständiger guter Wärmeübergang zwischen den beiden Teilen gegeben ist. Eine Relativbewegung beider Teile an ihrer Berührungsfläche ist ausgeschlossen, da durch die ständige Verbindung praktisch keine Temperaturunterschiede von einem Teil zum anderen bestehen. Die beschriebene betriebliche Einheit wird außerhalb der Reifenheizpresse gemeinsam vorgewärmt. Dazu wird die Heizplatte mit Hilfe von sog. Schnellverschlußkupplungen einfach an eine Dampfheizleitung angeschlossen. Eine separate Vorheizeinrichtung ist nicht erforderlich. Beim Einbau in die Reifenheizpresse wird die Heizplatte, ebenfalls mit Hilfe von Schnellverschlußkupplungen, an die presseneigene Dampfheizung angeschlossen, so daß sich insgesamt eine nur geringe Unterbrechung der Heizung der Reifenformteile ergibt.

In bekannten Pressen sind in der Formdruckplatte, der Isolierplatte, der Heizplatte und der Reifenformteile gleiche Lochreihenmuster vorhanden, um alle genannten Bauteile mit Hilfe von langen Durchgangsschrauben miteinander zu verschrauben. Die Lochreihenmuster sind innerhalb eines Vulkanisierbetriebes gleich, können aber von Vulkanisierbetrieb zu Vulkanisierbetrieb durchaus unterschiedlich sein. Die vorliegende Erfindung hat nun den weiteren Vorteil, daß auch vorhandene, alte Heizplatten und Reifenformteile verwendet werden können, wobei lediglich die Löcher der Heizplatten angesenkt werden müssen, um die Köpfe der (nunmehr kürzeren) Schrauben unter der Oberfläche der Heizplatte zu halten. Vorteilhafterweise ist die betriebliche Einheit aus Heizplatte und Reifenformteilen so ausgebildet, daß die Vorsprünge der Spannelemente unmittelbar an einem Vorsprung bzw. an einer Anlagefläche der Heizplatte anliegen.

Damit die Anpreßkraft auf die aus Heizplatte und Reifenformteilen bestehende betriebliche Einheit immer zuverlässig vorhanden ist, ist vorgesehen, daß das Spannelement zum Aufbringen der Anpreßkraft eine mechanische Federanordnung aufweist und daß zum Lösen bzw. Überwinden der Anpreßkraft ein Druckmittelzylinder vorgesehen ist. Vorteilhafterweise ist die Federanordnung innerhalb des Druckmittelzylinders untergebracht, wodurch eine kompakte Bauform erreicht wird.

Ein Ausführungsbeispiel der Erfindung ist in der Zeichnung dargestellt und wird im folgenden näher beschrieben. Es zeigen

Fig. 1 eine Reifenheizpresse mit den Formdruckplatten, den Heizplatten und den Reifenformteilen in einem halben, auszugsweisen Querschnitt,

Fig. 2 ein Spannelement in einem Querschnitt und

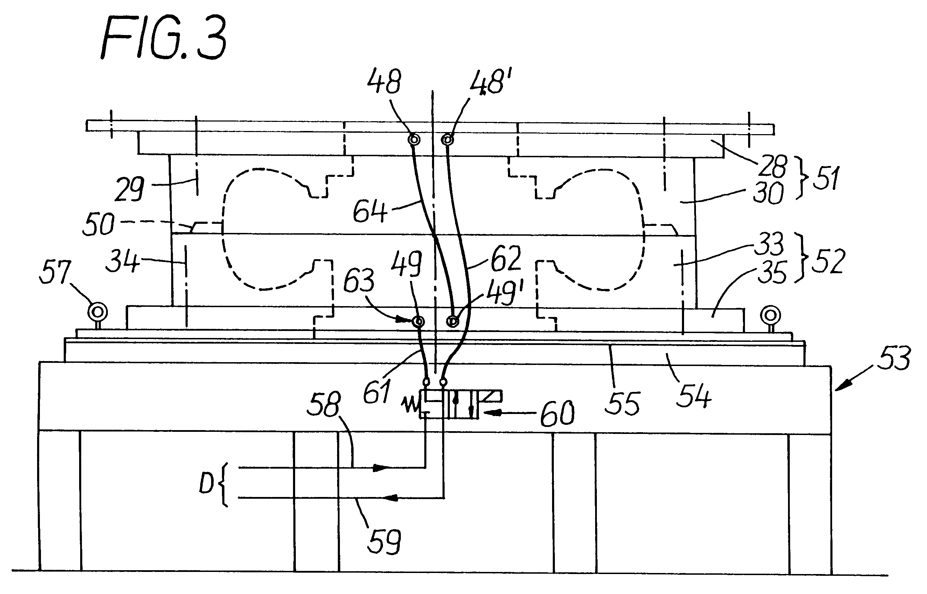

Fig. 3 die aus den Reifenformteilen und Heizplatten gebildeten Einheiten beim Vorwärmen.

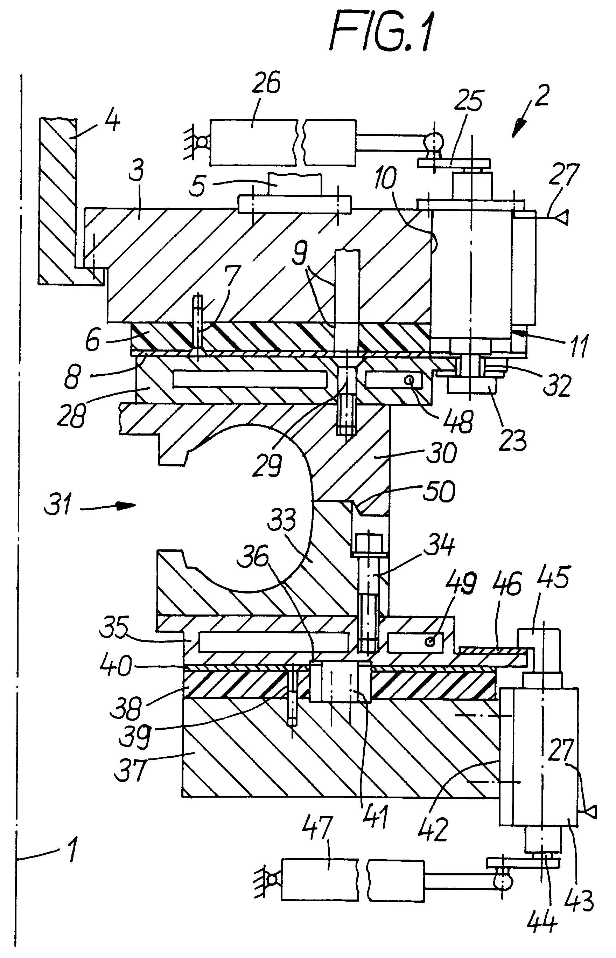

In Fig. 1 ist eine Seite der ansonsten rotationssymmetrisch zur Pressenachse 1 ausgebildeten Reifenheizpresse 2 auszugsweise dargestellt. Der grundsätzliche Aufbau der Reifenheizpresse 2 kann gleich dem der in der DE-OS 34 43 730 offenbarten Presse sein.

Die obere Formdruckplatte 3 ist in bekannter Weise an der Führungssäule 4 befestigt und von der Kolbenstange 5 eines Hubzylinders auf- und abbewegbar. An der Unterseite der Formdruckplatte 3 befindet sich eine Isolierplatte 6, die mit Hilfe von Schrauben 7 an der oberen Formdruckplatte 3 befestigt ist. Aus Gründen der mechanischen Festigkeit ist die Isolierplatte 6 an der Unterseite von einem Stahlblech 8 überzogen, in das auch die Köpfe der Schrauben 7 versenkt sind.

Die Formdruckplatte 3 und die Isolierplatte 6 weisen im Rahmen eines Lochschemas (Lochreihenmusters) Durchgangslöcher 9 auf. Zusätzlich weisen sie Durchgangsöffnungen 10 größeren Durchmessers auf, in denen jeweils ein Druckmittelyzlinder 11 untergebracht ist.

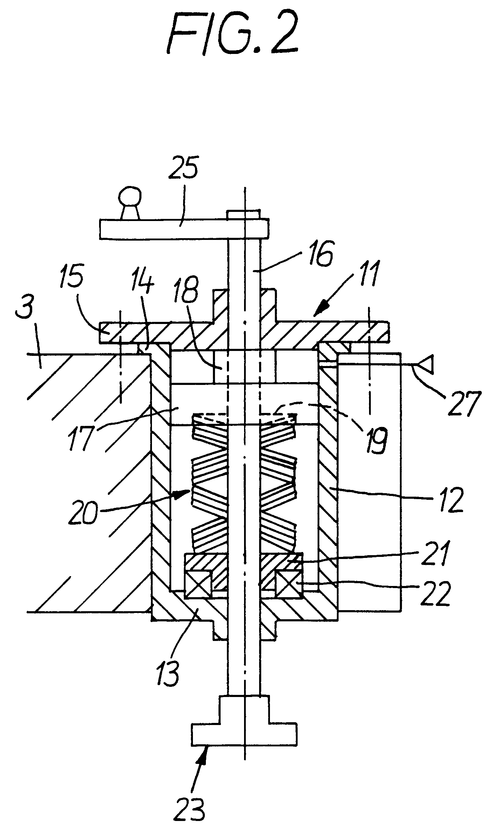

In Fig. 2 ist ein solcher Druckmittelzylinder 11 mit mehr Einzelheiten dargestellt. Jeder Druckmittelzylinder 11 weist ein Gehäuse 12 auf, das unten einen Boden 13 und oben einen Flansch 14 aufweist. Mit dem Flansch 14 liegt der Druckmittelzylinder 11 auf der Formdruckplatte 3 auf und wird dort zusammen mit dem Zylinderdeckel 15 befestigt. Der Druckmittelzylinder 11 weist eine durchgehende Kolbenstange 16 auf, auf der ein Kolben 17 mit einem oberen Bund 18 befestigt ist. Der Kolbenbund 18 stößt zur Begrenzung der oberen Endlage des Kolbens 17 und der Kolbenstange 16 an den Zylinderdeckel 15 an. An der Unterseite weist der Kolben 17 eine rotationssymmetrische Ausnehmung 19 zur Aufnahme von Tellerfedern 20 auf, die sich unten auf einem Ring 21 abstützen. Dieser Ring 21 ist wiederum über ein Kugellager 22 am Boden 13 des Druckmittelzylinders 11 drehbar abgestützt. Die nach oben und nach unten durchgehende Kolbenstange 16 weist unten einen hammerförmigen Kopf 23 mit zwei außermittigen Vorsprüngen und oben einen verdrehfesten Querhebel 25 auf. Das freie Ende des Querhebels 25 ist gelenkig mit der Kolbenstange eines mit seinem anderen Ende ortsfest angelenkten Druckmittelzylinders 26 verbunden. Der Druckmittelzylinder 26 ist in der Lage, den Querhebel 25 und damit die Kolbenstange 16 und den Kopf 23 um mindestens 90° zu drehen. Zwischen dem Zylinderdeckel 15 und dem Kolben 17 ist ein Druckmittelanschluß 27 vorgesehen.

Eine obere Heizplatte 28 ist durch Schrauben 29 mit dem oberen Teil 30 der Reifenform 31 zu einer betrieblichen Einheit verbunden. Entsprechend der Lage der Druckmittelzylinder 11 in der Formdruckplatte 3 weist die Heizplatte 28 Durchgangsöffnungen 32 auf, deren Querschnitt im wesentlichen dem des hammerförmigen Kopfes 23 entspricht. In der quer zur Zeichenebene ausgerichteten Lage kann der hammerförmige Kopf 23 also ohne Behinderung durch die Durchgangsöffnung 32 hindurchtreten bzw. die Heizplatte 28 über den Kopf 23 an die Formdruckplatte 3 bzw. an das Stahlblech 8 gedrückt werden. Wenn der hammerförmige Kopf 23 nach dem Hindurchtreten durch die Durchgangsöffnung 32 bzw. nach dem Hochdrücken der Heizplatte 28 über den Kopf 23, wie in Fig. 1 für die Endstellung dargestellt, um 90° gedreht ist, wird die Heizplatte 28 von den Vorsprüngen des hammerförmigen Kopfes 23 erfaßt.

Der untere Teil 33 der Reifenform 31 ist mit Hilfe von Schrauben 34 mit der unteren Heizplatte 35 zu einer betrieblichen Einheit verbunden. An der Unterseite weist die untere Heizplatte 35 mehrere, vorzugsweise vier, in bezug auf die Pressenachse 1 radiale Längsnuten 36 auf.

Die untere Formdruckplatte 37 trägt an ihrer Oberseite eine Isolierplatte 38. Beide sind mit Hilfe von Schrauben 39 miteinander verbunden. Die Isolierplatte 38 ist mit einem Stahlblech 40 überzogen, in dem die Köpfe der Schrauben 39 versenkt sind.

Entsprechend der radialen Längsnuten 36 in der unteren Heizplatte 35 sind auf der unteren Formdruckplatte 37 durch die Isolierplatte 38 und das Stahlblech 40 hindurchgehende Führungskörper 41 befestigt, die in Richtung der Längsnuten 36 einen vorzugsweise vierkantigen Querschnitt aufweisen.

Die untere Formdruckplatte 37 weist an ihrer Umfangsfläche 42 befestigte Druckmittelzylinder 43 auf. Das obere Ende der Kolbenstange 44 der Druckmittelzylinder 43 weist einen einzigen Vorsprung 45 auf, der einen flanschartigen Vorsprung 46 der unteren Heizplatte 35 erfaßt. Ansonsten weisen die Druckmittelzylinder 43 den gleichen Aufbau auf wie die Druckmittelzylinder 11. Wie die Kolbenstangen 16 der Druckmittelzylinder 11 sind auch die Kolbenstangen 44 der Druckmittelzylinder 43 durch einen Druckmittelzylinder 47 um mindestens 90° verdrehbar.

Zum Einbau der Reifenform 31 in die leere Reifenheizpresse 2 werden die Reifenformteile 30, 33 durch die ständig mit ihnen verbundenen Heizplatten 28 bzw. 35 außerhalb der Reifenheizpresse vorgewärmt. Dazu werden die beiden, aus dem oberen Reifenformteil 30 und der oberen Heizplatte 28 und aus dem unteren Reifenformteil 33 und der unteren Heizplatte 35 gebildeten, betrieblichen Einheiten 51, 52 auf ein Gestell 53 in möglichst geringer Entfernung außerhalb der Reifenheizpresse 2 abgelegt und an ein Dampfsystem D angeschlossen. Das Gestell 53 ist an seiner Auflagefläche mit einer Isolierplatte 54 versehen, die an ihrer oberen Fläche - wie die untere Isolierplatte 38 in der Reifenheizpresse - mit einem Stahlblech 55 überzogen ist.

Die beiden Einheiten 51, 52 liegen - durch das konische Flächenpaar 50 der Reifenformteile 30, 33 zentriert - lose aufeinander und ohne jede Verspannung auf dem Gestell 33. Wenn die untere Einheit 52, z.B. durch an ihr angebrachte Ösen 57, zum Transport in die Reifenheizpresse 2 angehoben wird, wird die obere Einheit 51 mit transportiert.

Das Dampfsystem D weist eine an eine Sattdampf-Quelle angeschlossene Dampfzuführleitung 58 und eine Dampfrücklaufleitung 59 auf. Die beiden Leitungen 58, 59 weisen eine gemeinsame Absperrventilanordnung 60 auf, an der zwei flexible Druckleitungen oder Druckschläuche 61, 62 angeschlossen sind. Die eine Druckleitung, 61, ist mit Hilfe einer Schnellverschlußkupplung 63 an einem ersten Heizanschluß 49 der unteren Heizplatte 35 angeschlossen. Der zweite Heizanschluß 49' der unteren Heizplatte 35 ist über eine dritte, ebenfalls mit Schnellverschlußkupplungen versehene Druckleitung 64 mit dem ersten Heizanschluß 48 der oberen Heizplatte 28 verbunden. Der zweite Heizanschluß 48' der oberen Heizplatte 28 ist über die Druckleitung 62 mit der Ventilanordnung 60 verbunden. Der Weg des Heizdampfes (Sattdampf) führt also von der Leitung 59 durch die Druckleitung 61, die untere Heizplatte 35, die Druckleitung 64, die obere Heizplatte 28 und die Druckleitung 62 durch das Ventil 60 zurück in die Leitung 58.

Am Ende des Vorwärmens werden die flexiblen Druckleitungen 61, 62, 64 gelöst und beide Einheiten 51, 52 - bei angehobener oberer Formdruckplatte 3 und bei entgegen der Darstellung in Fig. 1 um 90° gedrehten Vorsprüngen 45 - auf die untere Formdruckplatte 37 bzw. die darüber befindliche Isolierplatte 38 mit dem Stahlblech 40 abgesetzt, wobei sich durch die Führungskörper 41 und die Nuten 36 eine gute Zentrierung ergibt. Die Druckmittelzylinder 43 sind dabei mit einem Druckmittel beaufschlagt, so daß die Kolbenstangen 44 mit dem Vorsprung 45 entgegen der Federwirkung nach oben gedrückt sind.

Nach dem Auflegen der Einheiten 51, 52 auf der unteren Formdruckplatte 37 in der Reifenheizpresse wird zunächst die Kolbenstange 44 durch den Druckmittelzylinder 43 in die in Fig. 1 dargestellte Lage gedreht und das Druckmittel abgelassen, so daß die Heizplatte 35 mit der Spannkraft der in den Druckmittelzylindern 43 vorhandenen Tellerfedern auf die untere Formdruckplatte 37 gepreßt wird.

Anschließend wird die obere Formdruckplatte 3 runtergefahren, bis die mit der Isolierplatte 6 und dem Stahlblech 8 auf der oberen Heizplatte 28 aufliegt. Dabei sind die Druckmittelzylinder 11 mit Druckmittel beaufschlagt und der Hammerkopf 23 entgegen der Darstellung in Fig. 1 um 90° gedreht. Durch Drehen des Hammerkopfes 23 um 90° in die in Fig. 1 dargestellte Stellung und Ablassen des Druckmediums durch den Anschluß 27 wird die obere Heizplatte mit der Kraft der Tellerfedern 20 an die obere Formdruckplatte angepreßt. Danach werden die Heizplatten 35 und 28 an die presseneigene Dampfversorgung angeschlossen.

Ein Wechsel der aus den Heizplatten 28 bzw. 35 und den Reifenformen 30 bzw. 33 bestehenden Einheiten 51, 52 erfolgt analog.

Statt einer Reifenform mit einem oberen und einem unteren Teil kann auch eine zusammengesetzte Reifenform mit Umfangssegmenten eingesetzt werden.

**Patentansprüche**

1. Reifenheizpresse mit einer oberen und einer unteren Formdruckplatte, an deren der jeweils anderen Formdruckplatte zugewandten Flächen eine Isolierplatte befestigt ist, mit einer zum Anliegen an der jeweiligen Isolierplatte bestimmten Heizplatte und mit jeweils einem zum Anliegen an der jeweiligen Heizplatte bestimmten Reifenformteil, wobei zumindest ein Reifenformteil mittelbar oder unmittelbar durch mehrere Spannelemente, die jeweils mit einer parallel zur Hauptachse der Reifenheizpresse angeordneten, drehbaren Zugstange mit mindestens einem außermittigen Vorsprung versehen sind, in Richtung auf die Formdruckplatte heranpreßbar ist,
**dadurch gekennzeichnet**,
daß die jeweilige Heizplatte (28 bzw. 35) und das zugehörige Reifenformteil (30 bzw. 33) als betriebliche Einheit (51, 52) fest miteinander verbunden sind und die Vorsprünge (23 bzw. 45) der Spannelemente (11 bzw. 43) im betriebsbereiten Zustand der Reifenheizpresse an den aus Heizplatte (28 bzw. 35) und Reifenformteil (30 bzw. 33) bestehenden Einheiten (51 bzw. 52) anliegen.

2. Reifenheizpresse nach Anspruch 1, dadurch gekennzeichnet, daß die obere und die untere Heizplatte (28 bzw. 35) mit dem jeweils zugeordneten Reifenformteil (30 bzw. 33) verschraubt ist.

3. Reifenheizpresse nach einem der Ansprüche 1 oder 2, dadurch gekennzeichnet, daß die Vorsprünge (23 bzw. 45) der Spannelemente (11 bzw. 43) unmittelbar an einer Anlagefläche (46) der Heizplatte (28 bzw. 35) anliegen.

4. Reifenheizpresse nach einem der Ansprüche 1 bis 3, dadurch gekennzeichnet, daß das Spannelement (11, 43) zum Aufbringen der Anpreßkraft eine mechanische Federanordnung (20) aufweist und daß zum Lösen bzw. Überwinden der Anpreßkraft ein Druckmittelzylinder (11 bzw. 43) vorgesehen ist.

5. Reifenheizpresse nach Anspruch 4, dadurch gekennzeichnet, daß die Federanordnung (20) innerhalb des Druckmittelzylinders (11, 43) untergebracht ist.

6. Reifenheizpresse nach einem der Ansprüche 1 bis 5, dadurch gekennzeichnet, daß die obere und die untere Heizplatte (28 bzw. 35) jeweils zusammen mit den zugeordneten Reifenformteilen (30 bzw. 33) vor dem Einbau in die Reifenheizpresse (2) als betriebliche Einheit (51, 52) an einer Dampfquelle (D = 59, 60) angeschlossen und als Einheit in vorgewärmtem Zustand in die Reifenheizpresse (2) eingebaut werden.

# FIG.1

# FIG.2

FIG.3